(19) Europäisches Patentamt / European Patent Office / Office européen des brevets

(11) **EP 2 492 541 A1**

(12) **DEMANDE DE BREVET EUROPEEN**

(43) Date de publication:
**29.08.2012 Bulletin 2012/35**

(51) Int Cl.:
***F16F 15/26*** *(2006.01)*

(21) Numéro de dépôt: **12305201.1**

(22) Date de dépôt: **22.02.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **24.02.2011 FR 1151487**

(71) Demandeur: **Renault S.A.S.**
**92100 Boulogne-Billancourt (FR)**

(72) Inventeurs:
• **Polac, Laurent**
**92150 Suresnes (FR)**
• **Mouvet, Matthieu**
**78000 Versailles (FR)**

(54) **Dispositif de réduction de roulis de groupe moto-propulseur**

(57) Dispositif de réduction du roulis d'un groupe motopropulseur qui comporte un premier système (S1) comprenant la structure fixe dudit groupe et doté d'une inertie I1, et un deuxième système (S2) comprenant un vilebrequin (14), tournant autour d'un axe de rotation, ledit dispositif de réduction de roulis étant un système (S3) d'inertie contrarotatif tournant autour du même axe que le vilebrequin (14) et est relié à une extrémité du groupe motopropulseur **caractérisé en ce que** le dispositif (S3) comprend un train épicycloïdal comprenant une couronne cylindrique (16) de rayon R16, au moins trois satellites dont les axes sont solidaires d'un porte-satellites (19) sous la forme d'anneau cylindrique, et un planétaire (18) de rayon R18 qui est animé d'un mouvement de rotation autour du même axe que le vilebrequin (14) et dans un sens opposé.

**Fig. 2**

**Description**

**Domaine technique auquel se rapporte l'invention**

La présente invention concerne les dispositifs de réduction des vibrations des groupes motopropulseurs des moteurs à combustion interne.

L'invention concerne plus particulièrement les dispositifs de réduction du roulis des groupes motopropulseurs qui sont coaxiaux avec l'axe du vilebrequin.

L'invention concerne également un groupe motopropulseur équipé d'un dispositif de réduction du roulis.

**Etat de la technique antérieure**

On connait un groupe motopropulseur qui comprend un vilebrequin tournant autour d'un axe longitudinal et relié par des liaisons pivots à des bielles qui sont associées à des pistons coulissant avec des mouvements de va et vient (ou alternatif) dans des cylindres. Le fonctionnement du moteur, même à régime permanent, génère des vibrations du fait de la variation du couple moteur instantané, due au cycle thermodynamique (efforts de pression des gaz) et à la cinématique de l'attelage mobile qui est l'ensemble formé des bielles et des pistons. Ces vibrations entrainent d'une part une fluctuation de vitesse du vilebrequin et par conséquent des oscillations de vitesse, et d'autre part des mouvements de roulis du groupe motopropulseur (ou GMP). Les oscillations de vitesse du vilebrequin se transmettent via la chaîne cinématique aux roues lorsque la boîte de vitesse est en prise. Les mouvements de roulis du GMP quant à eux se transmettent à la structure du véhicule via les points de liaison élastique entre le GMP et le véhicule, que la boîte de vitesses soit en prise ou non. Les effets perçus par les occupants du véhicule sont des vibrations et du bruit dans l'habitacle, notamment au ralenti et lorsque le moteur est à bas régime. Cet effet est d'autant plus intense que la charge moteur est élevée et le régime moteur est bas, car il provient de la somme des oscillations du vilebrequin et des vibrations de roulis du GMP.

Pour réduire voire annuler les oscillations de vilebrequin dénommées acyclismes, on adopte généralement un volant d'inertie qui permet de rendre plus régulier le régime de fonctionnement du GMP, ou on introduit un filtre mécanique à une extrémité du vilebrequin. Ce filtre peut être formé d'un premier volant d'inertie solidaire du vilebrequin et d'un second volant d'inertie relié au premier par un dispositif élastique. Il est alors calé pour étouffer les oscillations au-dessus d'une fréquence dépendant des caractéristiques dudit filtre. Selon les valeurs des inerties des différents composants et de la raideur du dispositif élastique, les oscillations transmises à la boîte de vitesses à partir du régime de ralenti sont réduites fortement.

Pour réduire voire annuler les oscillations de roulis du GMP, on peut mettre en place des solutions fondées sur des asservissements de raideur de la liaison élastique entre le GMP et le véhicule ou des systèmes actifs introduisant des contre efforts sur le véhicule visant à annuler les efforts du GMP sur ledit véhicule.

On peut également mettre en place des systèmes d'inertie contrarotatifs tels que celui décrit dans la publication EP2199642. Un ensemble constitué par le volant d'inertie et le vilebrequin d'une part et un volant contrarotatif d'autre part sont coaxiaux et disposés tous deux à l'intérieur du carter moteur. Le volant contrarotatif tourne dans le sens contraire à celui du vilebrequin, à une vitesse angulaire égale en valeur absolue. Un inconvénient de ce système est le diamètre du volant contrarotatif qui accroit l'encombrement du moteur.

On peut également accroitre le nombre de cylindres du moteur à combustion interne, augmentant de fait les coûts et l'encombrement du moteur.

**Objet de l'invention**

Un but de l'invention est de pallier ces inconvénients et l'invention a pour objet un dispositif simple à mettre en place, relativement peu couteux et d'un encombrement relativement faible.

L'objet de l'invention est caractérisé plus particulièrement par la mise en place un dispositif de réduction du roulis de GMP à une extrémité dudit GMP.

Avantageusement, un train épicycloïdal est fixé à une extrémité du GMP partageant le même axe que le vilebrequin, ledit train épicycloïdal est composé d'une couronne cylindrique, de satellites et d'un porte-satellites et d'un planétaire, ledit planétaire est animé d'un mouvement de rotation selon le même axe que celui du vilebrequin mais en sens opposé.

Avantageusement, une masse est reliée audit planétaire et solidaire en rotation avec le planétaire afin d'augmenter l'inertie du train épicycloïdal.

Avantageusement, le planétaire est animé d'une vitesse de rotation sensiblement supérieure à la vitesse de rotation du vilebrequin et en sens inverse. Le rapport de vitesses diminue le besoin en inertie reliée au planétaire.

Avantageusement, selon un mode de réalisation, la couronne cylindrique du train épicycloïdal est solidaire de l'axe du vilebrequin et entraine le train épicycloïdal.

Avantageusement, le porte-satellites du train épicycloïdal est solidaire du carter du GMP et permet d'inverser le sens de rotation.

Avantageusement, les satellites engrènent sur le planétaire en rotation en sens opposé au sens de rotation du vilebrequin, ledit planétaire est solidaire de la masse.

Avantageusement, les valeurs d'inertie de la masse, des rayons du planétaire et de la couronne, et de l'inertie de l'ensemble mobile sont reliées et choisies pour réduire fortement le roulis du GMP.

Avantageusement, le dispositif de réduction de roulis du GMP est mis en place à l'une ou l'autre extrémité, selon l'axe longitudinal, du GMP.

D'autres aspects de l'invention vont être présentés dans la description suivante en regard des dessins annexés, donnée à titre d'exemple non limitatif, dans le seul but de bien comprendre l'invention et comment elle peut être réalisée.

## Description des dessins

La figure 1 est une vue schématique des systèmes concourant aux roulis du GMP.
La figure 2 est une vue schématique des éléments du dispositif de réduction de roulis du GMP.
La figure 3 est une vue schématique de coupe transverse du dispositif de réduction de roulis du GMP.

## Exposé de modes de réalisation de l'invention

Les descriptions qui suivent se réfèrent à l'axe longitudinal X, l'axe transversal Y et l'axe vertical Z du GMP.

L'invention est fondée sur le principe de l'action et de la réaction appliquée aux mouvements de rotations du GMP et a pour objet de réduire significativement les accélérations angulaires du groupe motopropulseur autour de son axe longitudinal.

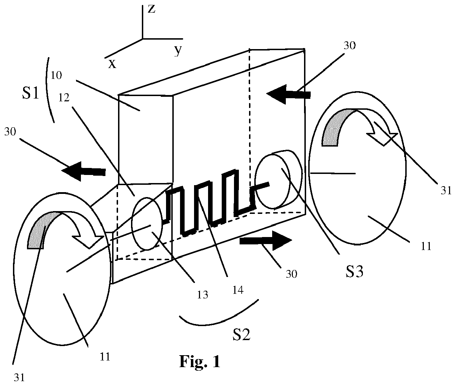

Sur la figure 1, les différents éléments influant dans les mouvements de rotation du GMP comprennent trois systèmes S1, S2, S3. Un premier système S1 repéré 1 comprend la structure fixe du GMP comportant le carter de moteur 10 et de boîte de vitesses 12. Un deuxième système S2 repéré 2 dénommé chaîne cinématique, comprend un vilebrequin 14, un volant 13, un embrayage, des arbres de boîte de vitesses, un différentiel et des arbres de transmission (non représentés). Un troisième système S3 repéré 3, ajouté pour réduire les mouvements de roulis, comprend un rotor tournant en sens opposé au sens de rotation du vilebrequin et un stator solidaire du GMP.

On considère l'ensemble formé des trois systèmes S1 1, S2 2 et S3 3. Selon les équations de la mécanique réduites aux mouvements de rotation, on sait que la somme des moments des forces extérieures appliquées sur les trois systèmes est égale à la dérivée du moment cinétique des trois systèmes par rapport au temps :

$$\sum Moments_{ForcesExt}(S_1 \bigcup S_2 \bigcup S_3) = d[Momentcinétique(S_1 \bigcup S_2 \bigcup S_3)]/dt$$

(Eq1)

Les forces extérieures appliquées sur l'ensemble formé des trois systèmes S1, S2 et S3 sont les forces de réaction au niveau des liaisons 30 entre les tampons et la structure fixe du GMP, les couples 31 de réaction des roues 11 sur la chaîne cinématique. On fait une hypothèse simplificatrice selon laquelle la matrice d'inertie du premier système S1 1 de la structure fixe du GMP est diagonale dans le repère du moteur selon les trois axes x, y et z. L'équation précédente Eq1 conduit à une équation simple du roulis (ou de rotation autour d'un axe parallèle à l'axe longitudinal x, passant par les centres de gravité des trois systèmes S1, S2, S3 dénommés G1, G2 et G3 respectivement (non représentés) :

$$Moment_{forcesext1} + Moment_{forceext2} = I_1.\Theta_1'' + I_{2eq}.\Theta_2'' + I_3.\Theta_3''$$ (Eq2)

Où

- $I_1$ représente le moment d'inertie du système S1 de la structure fixe du GMP autour de son axe de roulis passant par son centre de gravite G1, $I_{2eq}$ représente le moment d'inertie équivalente (rapporté au volant) de la chaîne cinématique S2 et $I_3$ le moment d'inertie de roulis du dispositif de réduction de roulis S3.

- $\Theta_1''$, $\Theta_2''$, $\Theta_3''$ représentent respectivement les accélérations angulaires de roulis (autour de l'axe longitudinal x) du système S1 de structure fixe du GMP, du vilebrequin 15 et du dispositif de réduction de roulis S3.
- $Moment_{forcesext1}$ représente le moment des forces extérieures sur la structure fixe du système S1 qui comprennent des forces exercées par les pistons et le vilebrequin sur le système S1 (dont le moment qui n'est autre que le couple gaz + inertie) et des forces extérieures 30 sur le système S1.
- $Moment_{forcesext2}$ représente le moment des forces extérieures sur la chaîne cinématique S2 qui comprennent des forces exercées par les bielles et les paliers de vilebrequin (dont le moment est l'opposé du couple gaz+inertie) sur le vilebrequin et des forces extérieures 31 sur la chaîne cinématique 2, ledit couple gaz+inertie étant en valeur grand devant le moment des forces extérieures 31 sur la chaîne cinématique.

Le membre de gauche de l'équation Eq2 ne comprend donc que la somme des moments des forces extérieures 30 sur le système S1 de structure fixe du GMP plus le moment des forces extérieures 31 sur la chaîne cinématique S2.

$$I_{2eq}.\Theta_2'' = Moment_{forcesext2} \approx -Moment_{couple(gaz\,+\,inertie)} \qquad (Eq3)$$

Du côté gauche de l'équation Eq3, on a le mouvement de la chaîne cinématique caractérisé par le produit d'une inertie équivalente des inerties des différents éléments constitutifs de ladite chaîne tels un volant d'inertie, une poulie, le vilebrequin 14 , un arbre primaire de boîte de vitesses, un arbre secondaire de boîte de vitesses, un différentiel et des arbres de transmission, par une accélération angulaire de ladite chaîne autour de l'axe longitudinal x. En première approximation, l'inertie équivalente de la chaîne cinématique $I_{2eq}$ est égale sensiblement à la somme des inerties du volant 13, de la poulie et du vilebrequin 14. De l'autre côté, on a le moment des forces d'interaction entre les trois systèmes S1, S2 et S3 et principalement le moment de couple exercé par l'attelage mobile sur la structure fixe du GMP S1 et indicé couple(Gaz et Inertie). Une première partie Gaz est due à la pression des gaz qui se transforme en effort latéral à cause de l'obliquité de la bielle. Une deuxième partie Inertie est due aux efforts d'inertie du piston qui se transforment en efforts latéraux également à cause de l'obliquité de la bielle. Ledit moment est en valeur absolue très important par rapport à la somme des moments des forces 30 appliquées sur le groupe GMP et des moments des forces 31 appliquées sur la chaîne cinématique.

La vitesse angulaire du dispositif de réduction du roulis selon l'axe longitudinal x est proportionnelle à la vitesse angulaire de rotation du vilebrequin, le rapport étant le rapport de multiplication du train épicycloïdal noté $N$, et par conséquent les accélérations respectives sont également proportionnelles dans le même rapport.

$$\Theta_3'' = N.\Theta_2'' \qquad (Eq4)$$

On choisit I3 et N de manière à avoir l'équation :

$$I_{2eq} = -N.I_3 \qquad (Eq5)$$

Le rapport de multiplication N est négatif de façon à ce que le sens de rotation du dispositif de réduction de roulis de GMP soit opposé au sens de rotation du vilebrequin.

L'équation Eq2 devient

$$Moment_{forcesext1} + Moment_{forcesext2} = I_1.\Theta_1'' + I_{2eq}.\Theta_2'' + I3.\Theta_3''$$
$$Moment_{forcesext1} + Momentf_{forcesext2} = I_1.\Theta_1'' + (I_{2eq} + I_3.N).\Theta_2''$$

=>

$$Moment_{forcesext1} + Moment_{forcesext2} = Moment_{forces30surS1} + Moment_{forces31surS2} = I_1.\Theta_1'' \qquad (Eq6)$$

La somme des moments des forces extérieures 30 sur le système S1 de structure fixe du GMP et des moments des forces extérieures 31 sur la chaîne cinématique S2 est sensiblement nulle car des tampons (non représentés) sont réalisés pour reprendre les efforts de couple sur les liaisons entre le système S1 de structure du GMP et le véhicule et entre au moins une roue et la chaîne cinématique S2.

$$I_1.\Theta_1'' = Moment_{forcesext1} + Moment_{forcesext2} \approx 0 \Rightarrow \Theta_1'' \approx 0$$

L'accélération angulaire autour de l'axe longitudinal x du GMP $\Theta_1''$ est donc très faible. L'ajout du dispositif d'antiroulis a pour effet d'annihiler l'influence de l'attelage mobile sur la structure fixe du GMP et donc de supprimer principalement le moment des couples de roulis gaz et inertie. Le dispositif antiroulis tourne dans le sens opposé au vilebrequin, exerçant un couple contrarotatif. Il est caractérisé par un rapport de multiplication **N** négatif en valeur pour prendre en compte le changement de sens de rotation et une inertie de rotation autour de son axe longitudinal dont les valeurs sont reliées à l'inertie de la chaîne cinématique dans l'équation 5 réécrite sous la forme :

$$I_{2eq} + I_3.N = 0 \quad \text{(Eq5)}$$

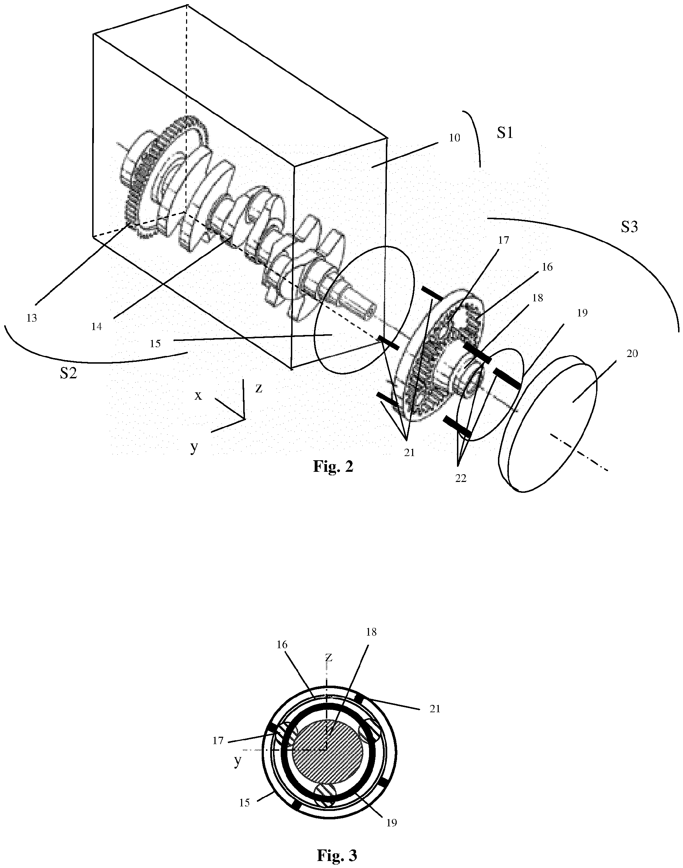

Selon la figure 2, le premier système S1 représente la structure fixe du GMP sous forme d'un parallélépipède rectangle modélisant le carter. Le deuxième système S2 comprend le volant 13, le vilebrequin 14 et une roue 15 solidaire de l'axe du vilebrequin 14. Le dispositif de réduction du roulis du GMP est le troisième système S3 et comprend une couronne cylindrique 16, des satellites 17 dont les axes sont maintenus par un porte-satellites 19, lesdits satellites engrènent sur un planétaire 18, ledit planétaire étant solidaire d'une masse 20 sous forme d'un disque cylindrique en acier afin d'accroitre l'inertie du planétaire.

Selon un premier mode de réalisation, illustré par la figure 3, la couronne cylindrique 16 est solidaire de la roue 15 en bout du vilebrequin 14 par un moyen de liaison en rotation, par exemple par des clavettes 21 fixées dans la couronne cylindrique et enfoncées dans des logements adaptés à cet effet dans la roue 15, et le porte-satellites 19 est solidaire du carter constituant du système S1 , par un moyen de liaison mécanique entre le carter 10 et le porte-satellites 19. Des pièces métalliques de type lames peuvent être fixées à une extrémité gauche au carter 10 et à l'autre extrémité droite au porte-satellites 19. Le porte-satellites 19 est une couronne métallique qui supporte les axes 22 des satellites 17 qui engrènent sur le planétaire 18. La couronne cylindrique 16 tourne dans le même sens de rotation que le vilebrequin 14, les satellites 17 dont les axes sont maintenus immobiles par le porte-satellites 19 tournent dans le même sens que la couronne cylindrique 16 et entrainent le planétaire 18 dans un mouvement de rotation en sens opposé. Le rapport de multiplication du train épicycloïdal composé de la couronne cylindrique 16, du porte-satellites 19 et des satellites 17 est le rapport du rayon $R_{16}$ de la couronne cylindrique 16 sur le rayon $R_{18}$ du planétaire 18 avec un signe négatif puisque tournant dans le sens opposé au sens de rotation du vilebrequin 14.

$$N = - R_{16}/R_{18} \quad \text{(Eq7)}$$

L'inertie du planétaire peut être augmentée par exemple avec la masse 20 de préférence cylindrique reliée au planétaire 18 par une liaison mécanique. Le planétaire 18 de forme cylindrique traverse le porte-satellites 19 et est relié par exemple par frettage à la masse 20. La masse 20 est choisie telle que l'inertie résultante I3 du dispositif S3 3 de réduction de roulis de GMP est liée à l'inertie équivalente I2eq en rotation de la chaîne cinématique S2 selon l'axe longitudinal x dans l'équation :

$$I_{2eq} + N.I_3 = 0$$

L'équation Eq6 est toujours vérifiée et l'accélération angulaire $\Theta_1''$ du système S1 du GMP est donc fortement réduite. Le train épicycloïdal apporte l'avantage de pouvoir user de plusieurs paramètres en particulier sur ladite masse cylindrique et ses dimensions pour réduire le roulis du GMP.

La présente invention enseigne un dispositif de réduction de roulis d'un groupe motopropulseur d'un véhicule automobile, simple et facile à fabriquer et qui est d'un encombrement réduit. Il n'est nullement limité au mode de réalisation décrit et représenté, et l'homme du métier saura apporter toute variante conforme à son esprit.

Par exemple, les exemples ci-avant présentent une disposition du système à une extrémité droite du GMP, le dispositif est relié au vilebrequin par l'intermédiaire d'une roue cylindrique. Ledit dispositif peut être adapté de l'autre côte du GMP et relié directement sur le volant d'inertie relié au vilebrequin.

La présente invention est applicable sur les groupes motopropulseurs de véhicule automobiles ou de groupes électrogènes. Le dispositif trouve son utilité davantage dans les groupes motopropulseurs avec un nombre réduit de cylindres.

**Revendications**

1. Dispositif de réduction du roulis d'un groupe motopropulseur qui comporte un premier système (S1) comprenant la structure fixe dudit groupe et doté d'une inertie I1, et un deuxième système (S2) comprenant un vilebrequin (14), tournant autour d'un axe de rotation, ledit dispositif de réduction de roulis étant un système (S3) d'inertie contrarotatif tournant autour du même axe que le vilebrequin (14) et est relié à une extrémité du groupe motopropulseur, **caractérisé en ce que** le dispositif (S3) comprend un train épicycloïdal comprenant une couronne cylindrique (16) de rayon R16, des satellites dont les axes sont solidaires d'un porte-satellites (19) sous la forme d'anneau cylindrique, et un planétaire (18) de rayon R18 qui est animé d'un mouvement de rotation autour du même axe que le vilebrequin (14) et dans un sens opposé.

2. Dispositif de réduction du roulis de GMP selon la revendication 1, **caractérisé en ce qu'**une masse (20) cylindrique est solidaire en rotation avec le planétaire (18) du train épicycloïdal.

3. Dispositif de réduction du roulis du GMP selon la revendication 2, **caractérisé en ce que** la masse cylindrique (20) a une vitesse de rotation sensiblement supérieure à la vitesse de rotation du vilebrequin.

4. Dispositif de réduction du roulis du GMP selon la revendication 3, **caractérisé en ce que** la couronne cylindrique (16) du train épicycloïdal est solidaire de l'axe de rotation du vilebrequin (14).

5. Dispositif de réduction du roulis du GMP selon la revendication 4, **caractérisé en ce que** le porte-satellites (19) du train épicycloïdal est solidaire du carter (10) du groupe motopropulseur.

6. Dispositif de réduction du roulis selon la revendication 5, **caractérisé en ce que** les valeurs I3 de l'inertie dudit dispositif (S3), R18 et R16 des rayons du planétaire(18) et de la couronne (16) et I2eq de l'inertie du deuxième système (S2) sont liées entre elles dans la relation : $I2eq +(- R16/R18). I3 = 0$.

7. Moteur à combustion interne équipé d'un dispositif de réduction du roulis selon l'une des revendications 1 à 6.

Fig. 1

**Fig. 2**

**Fig. 3**

Europäisches
Patentamt

European
Patent Office

Office européen
des brevets

**RAPPORT DE RECHERCHE EUROPEENNE**

Numéro de la demande

EP 12 30 5201

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2003 269541 A (MITSUBISHI HEAVY IND LTD) 25 septembre 2003 (2003-09-25) * figures * * alinéa [0026] * ----- | 1-7 | INV. F16F15/26 |
| A | EP 0 952 023 A1 (DOORNES TRANSMISSIE BV [NL]) 27 octobre 1999 (1999-10-27) * revendication 1 * * figure 1 * ----- | 1,7 | |
| A | GB 188 419 A (EMILE JOHN WELFFENS) 16 novembre 1922 (1922-11-16) * figure 1 * ----- | 1 | |
| A | WO 2007/138353 A2 (KESTREL POWERTRAINS LTD [GB]; SMITH MARTIN [GB]; PIRAULT JEAN-PIERRE []) 6 décembre 2007 (2007-12-06) * figure 1 * ----- | 1 | |
| A | DE 200 16 424 U1 (VOELPEL FRIEDHELM [DE]) 22 février 2001 (2001-02-22) * figure 1 * * revendication 1 * ----- | 1 | DOMAINES TECHNIQUES RECHERCHES (IPC) F16F |

Le présent rapport a été établi pour toutes les revendications

| Lieu de la recherche | Date d'achèvement de la recherche | Examinateur |
|---|---|---|
| La Haye | 20 mars 2012 | Beaumont, Arnaud |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 30 5201

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2012

| Document brevet cité au rapport de recherche | | Date de publication | Membre(s) de la famille de brevet(s) | | Date de publication |
|---|---|---|---|---|---|
| JP 2003269541 | A | 25-09-2003 | AUCUN | | |
| EP 0952023 | A1 | 27-10-1999 | DE | 69802069 D1 | 22-11-2001 |
| | | | DE | 69802069 T2 | 04-07-2002 |
| | | | DE | 69927296 D1 | 20-10-2005 |
| | | | DE | 69927296 T2 | 06-07-2006 |
| | | | EP | 0952023 A1 | 27-10-1999 |
| | | | EP | 1173692 A2 | 23-01-2002 |
| | | | ES | 2166589 T3 | 16-04-2002 |
| | | | ES | 2251839 T3 | 01-05-2006 |
| | | | JP | 4505137 B2 | 21-07-2010 |
| | | | JP | 2002513118 A | 08-05-2002 |
| | | | JP | 2002543340 A | 17-12-2002 |
| | | | JP | 2009287784 A | 10-12-2009 |
| | | | US | 6503166 B1 | 07-01-2003 |
| | | | US | 2002055407 A1 | 09-05-2002 |
| | | | WO | 9955549 A1 | 04-11-1999 |
| | | | WO | 9956039 A2 | 04-11-1999 |
| GB 188419 | A | 16-11-1922 | AUCUN | | |
| WO 2007138353 | A2 | 06-12-2007 | GB | 2440996 A | 20-02-2008 |
| | | | WO | 2007138353 A2 | 06-12-2007 |
| DE 20016424 | U1 | 22-02-2001 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- EP 2199642 A